# EUROPEAN PATENT SPECIFICATION

(11) **EP 2 689 974 B1**
(45) Date of publication and mention of the grant of the patent: **11.09.2019**
(21) Application number: 12177828.6
(22) Date of filing: 25.07.2012
(51) Int. Cl.: B60R 21/231, B29C 65/48, B29C 65/18, B29C 65/10, B29L 22/02

(54) **METHOD FOR PRODUCING A VEHICLE AIR-BAG**
HERSTELLUNGSVERFAHREN EINES FAHRZEUG-AIRBAGS
PROCÉDÉ DE FABRICATION D'UN AIRBAG POUR VÉHICULE

(43) Date of publication of application: 29.01.2014
(73) Proprietor: Autoliv Development AB, 447 83 Vårgårda (SE)
(72) Inventor: Abaziou, Xavier, 29800 Landernau (FR)
(74) Representative: Beattie, Alex Thomas Stewart

(56) References cited:
- WO-A2-2007/005600
- DE-A1-102008 060 392
- GB-A- 2 316 043
- JP-A- 56 021 843
- US-A- 4 803 029
- US-A- 5 123 987
- US-A- 5 514 431
- US-A1- 2007 284 033

## Description

### Description of Invention

THIS INVENTION relates to vehicle air-bags, and in particular to the production and manufacturing of vehicle air-bags.

Vehicle air-bags are conventionally made from one or more layers of woven fabric, with edges and/or other regions of the fabric being joined together to form at least one substantially enclosed chamber. During inflation of the air-bag, pressurised gas is introduced into the interior of the chamber(s) formed by these joins.

Formation of joins or seams in the manufacture of vehicle air-bags is an important process, as the seams must formed to be of a high strength and reliability to avoid failure when exposed to the high temperatures and forces that are encountered during deployment of an air-bag in an accident situation. Seams are typically formed by sewing regions of fabric together, or by specialised weaving processes which allow the yarns that make up regions of two superimposed layers of fabric to be interwoven with one another.

The formation of joins or seams can be a time-consuming process. Even though modern weaving looms are often able to create interwoven layers of fabric rapidly, the planning and set-up of these machines to carry out the necessary interweaving processes can be painstaking. This is particularly the case for more intricate designs of air-bag, which may include several chambers, some or all of which are interconnected with one another.

US5123987 A discloses a method of producing an air bladder from two uncured membranes. An air bladder is formed by producing a foil imprint on an inner surface of a first uncured rubber sheet, by heat pressing the imprint from a hot roll leaf stamping tape to the sheet. The first sheet is delivered from a reel to the heat press via a driven roller and idler roller combination. The hot roll leaf stamping tape is delivered above the first sheet via a take up reel and idler roll combination. The heating press includes a heated platen having the contour of the desired imprint, such that the imprint takes on the shape of the heated platen. A second sheet of uncured rubber is laminated to the first sheet, with the second sheet laminated over the first sheet, thereby convering the imprint. The two sheets are vulcanized which cures the non-imprinted surfaces of the rubber sheets together, thereby forming an air pocket in the shape of the imprint between the two sheets.

JP56021843 A discloses a fixed air fender and its manufacturing method. Two sheets of unvulcanized rubber sheets 11 and 12, for instance, which put a rubber cloth such as a canvas or the like between them, are treated unadhesively with silicone resin or the like other than the edge 13 of its one side. Then, the edge 13 is pasted each other with an adhesive vulcanization inserting an air feeding pipe 15 led to an adhesive zone 14 to form the air filled bag 3 with vulcanization. On the other hand, a molding body made of rubber or rubberlike elastic material having an attached flange 4 to a quay is formed a square and a mounting seat 7 having a concave 6 is allowed to protrude on the contrary surface of the attached position of the quay. The air filled bag 3 is housed into said concave and fixed to adhere, thereby being allowed to constitute through the air tender 1. Then, the air is fed and filled into the air filled bag 3 through the feeding pipe 15.

DE102008060392 A1 discloses an inflatable air bag for use in an air bag module for a passenger restraint system. The inflatable air bag has two air bag layers (11,12) and an adhesive unit, where an intermediate layer is arranged between the adhesive unit and the former air bag layer or between the adhesive unit and the latter air bag layer. A connection of adhesive unit with the former or latter air bag layer is prevented within the area of the intermediate layer. The adhesive unit is made of a rubber material or silicone, where the intermediate layer is made of textiles fabric, plastic and paper. Independent claims are also included for the following: (1) an air bag module, which has an air generator; and (2) a method for manufacturing an inflatable air bag.

US5514431 A discloses an air bag and method for making the air bag. An air bag is made by bonding a pair of sheets to each other by heat-sealing with a releasing layer corresponding to a pattern of a number of cellular air chambers sandwiched therebetween. A check valve for air infusion, which is used for filling air in the air bag, is mounted in one of the air chambers. When air is infused into a space between either of a pair of sheets and the releasing layer through an air infusion port of the check valve, the releasing layer and the corresponding sheet are peeled from each other by the air pressure. As a result, the air chambers are formed between the two layers.

WO2007/005600 A2 discloses a method for manufacturing inflatable footwear or bladders for use in inflatable articles. The method for manufacturing inflatable articles, or bladders for inflatable articles, that is time-efficient, simple, inexpensive and permits the uninterrupted manufacture of numerous and even customized article or bladder configurations and sizes, without expensive configuration-specific, metal tooling. The method includes the steps of applying a barrier material to a side of a first film, providing a second film with the first film so that the barrier material is disposed between the first and second films, adhering the first film to the second film so that the films are sealed together in areas except where the barrier material has been applied to form at least one inflatable compartment and sealed peripheral edge, and cutting along the sealed peripheral edge to form an inflatable article or bladder for use in an article of manufacture. The barrier material may be a paint, ink, paper or surface treatment that effectively prevents the first film from adhering to the second. The inflatable article or bladder of the present invention may be used as or in athletic equipment, for example, including footwear.

US4803029 A describes a process for manufacturing an expandable member. The process is for manufacturing an expandable member such as a tissue expander or like product for use in plastic, reconstructive, and other surgery. A compression mold with a desired initial, predetermined geometrical configuration shape is filled partially with a layer of unvulcanized flexible material, such as silicone, a thin layer of Teflon or like non-stick substance, and followed by another layer of unvulcanized material. The Teflon is "sandwiched" between the unvulcanized material and cured in an oven or by other suitable means. The non-stick material provides a separation region for subsequent expansion by injection of suitable material, air, fluid, etc. The non-stick material can be shaped to provide expansion only in the desired regions. Single, multiple, or overlapped layers of non-stick material may be employed to manufacture a variety of expandable products in the fields of medicine, surgery, consumer and industrial applications.

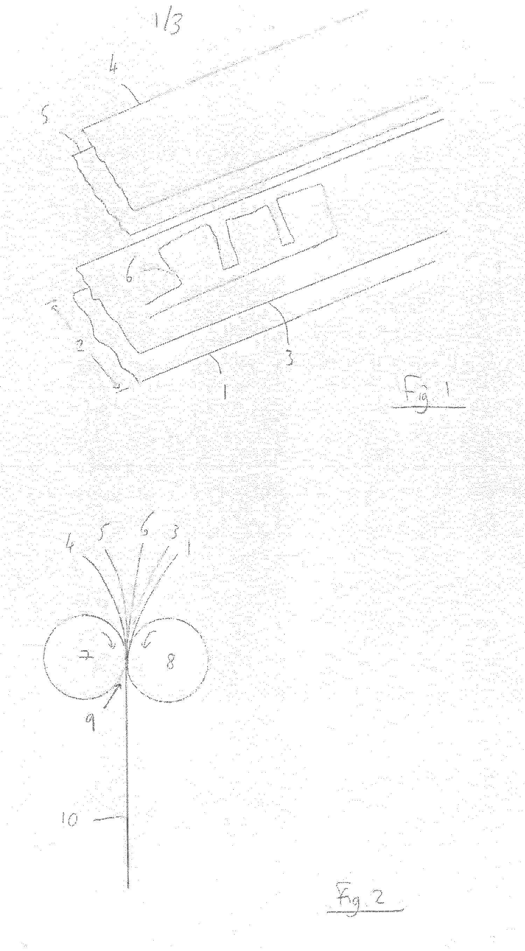

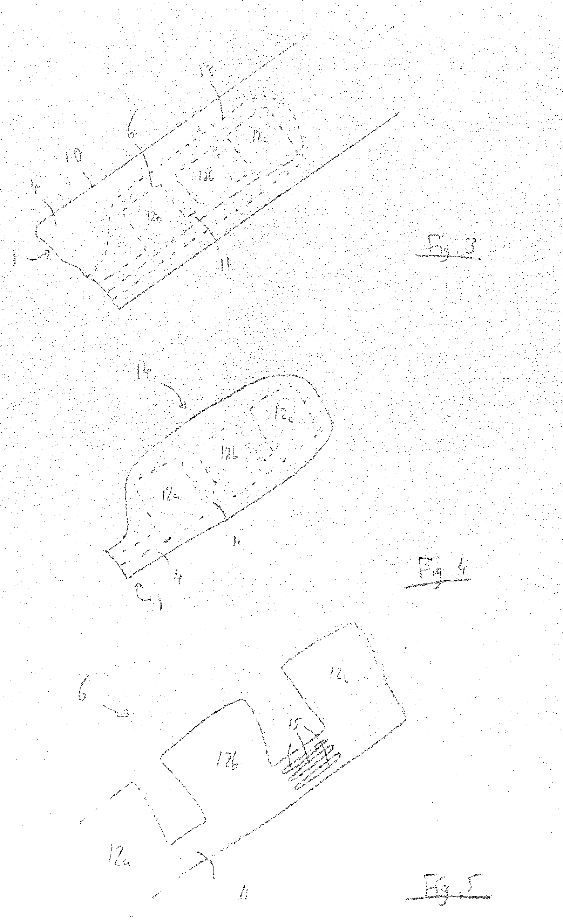

GB2316043 A describes a laminated airbag comprising elastomer and shape holding layers. Two circular airbag parts, one having an inflator aperture, are joined at their periphery by welding. Each of the parts comprises a urethane, ester or amide elastomer layer 2a, 3a laiminated over the whole of a polycarbonate, polyester polyimide or polyamide shape holding layer 2b, 3b which prevents excessive stretching of the elastomer layer. Each part may comprise two or three layers: e.g. two elastomer, one shape holding. To increase the peel strength of the welded joint, thermoplastic resin weld layers 8, 9 or a 'Y' shaped layer (12 Fig. 3a) are placed in the joint to dissipate peel forces. A peel member (11 Fig. 2b) is fitted between weld members during welding and is later removed. The weld layers are formed by cutting lateral slits in a tape shaped body and then forming an annulus (Figs. 5a, b).

US200702840033 A1 discloses a hot plate welding process. A method for welding material including applying a release material to a first film, the release material applied to locations where a weld is not desired; positioning a second film opposite the first film, the release material being positioned between the first film and the second film; placing the first film and the second film between planar press plates having planar surfaces and closing the press plates on the first film and the second film; applying energy to at least one of the press plates to weld the first film to the second film where the release material is absent.

The invention is defined by independent claim 1.

Advantageously, the first and second layers are fabric layers.

Preferably, the first and second layers are film layers.

Conveniently, a fibre reinforcement layer is provided adjacent at least one of the film layers.

Advantageously, the first and second layers are bonded to one another through an adhesive positioned between the layers.

Preferably, the masking layer is of low adhesive compatibility with the adhesive. Conveniently, two layers of adhesive are provided, one on an inner region of each of the layers.

Advantageously, one layer of adhesive is provided between the layers. Preferably, the adhesive is provided as a separate sheet which is introduced between the first and second layers of fabric prior to the bonding process. Conveniently, the adhesive is applied to one or both of the layers prior to the bonding process.

Advantageously, the first and second layers are bonded to one another through a hot-melt process.

Preferably, the masking layer has a higher melting point than at least one of the first and second layers.

Conveniently, the method further comprises the step of cutting around the masking layer to form the finished air-bag.

Advantageously, the cutting step is carried out after the bonding step.

Preferably, the regions of the first and second layers which are bonded together are superimposed to lie substantially flat on one another, and are not folded to form seams.

Conveniently, the regions of the first and second layers which are bonded together are bonded together by means of an adhesive.

Advantageously, the regions of the first and second layers which are bonded together are bonded together by means of a hot melt process.

Preferably, the masking layer also provides reinforcement of the air-bag.

Conveniently, the masking layer is present in a region of the air-bag at which, when the air-bag is deployed, compressed gas is introduced into the air-bag.

Advantageously, the masking layer is folded on itself to provide a double layer of the masking layer and, when the air-bag is deployed, compressed gas is introduced into the air-bag in a region substantially between the two layers of the double layer.

Preferably, at least a part of an inflator for the air-bag is provided between the two layers of the double layer.

In order that the present invention may be more readily understood embodiments thereof will now be described, by way of example, with reference to the accompanying drawings, in which:
Figure 1 is a schematic view of layers used to form an air-bag in accordance with the present invention;
Figures 2 and 3 show manufacturing steps in the formation of an air-bag;
Figure 4 shows a finished air-bag; and
Figure 5 shows a masking layer used in the manufacture of an alternative air-bag embodying the present invention.

Referring firstly to figure 1, the layers used to form an air-bag according to the present invention are shown in a schematic, "exploded" view. A first layer 1 of air-bag fabric forms a lowermost layer. The first layer 1 comprises any suitable material, for instance a woven fabric formed from nylon or polyester. The first layer 1 may be provided as a strip of standard width 2, provided from a roll or other supply of material.

A first layer 3 of adhesive provides the next layer. The adhesive may be of any suitable form, but in preferred embodiments is of an "activatable" type that will not, in the first instance, adhere strongly to the first layer 1 of fabric.

In the depicted embodiment the first layer 3 of adhesive is provided as a thin, flexible film, of substantially the same width 2 of the first layer 1 of fabric. The first layer 3 of adhesive therefore substantially covers an inner side of the first layer 1 of fabric.

A second layer 4 of fabric is provided, substantially opposite the first layer 1. The second layer 4 of fabric is preferably formed from the same material as the first layer 1, and is also provided in the form of a strip having the same width 2 as the first layer 1.

A second layer 5 of adhesive is provided to cover an inner side of the second layer 4 of fabric, in a manner that may be similar or identical to the way in which the first layer 3 of adhesive covers the first layer 1 of fabric.

It will therefore be understood that two layers 1, 4 of fabric are provided, with two layers 3,5 of adhesive provided to cover the inner sides of the two layers 1,4 of fabric, and with the two layers 3,5 of adhesive facing one another.

In preferred embodiments, the two layers 3, 5 of adhesive are activatable, and will not adhere strongly to one another prior to activation.

In further embodiments, the two layers 3,5 of adhesive may be different components of a two-component adhesive. In these embodiments, each layer 3,5 will not adhere strongly to other objects, but the two layers of adhesive 3,5 will, when they come into contact with one another, combine to form a strong adhesive.

Interposed between the two layers 3,5 of adhesive is a masking layer 6. The masking layer 6 is shaped so that it occupies only a part of the region between the two layers 1,4 of fabric. The shape of the masking layer 6 is important, as will be discussed in more detail below.

The masking layer 6 is of a material that is selected so that it will form no adhesive bond, or only a relatively weak adhesive bond, with at least one, and preferably both, of the first and second layers 3,5 of adhesive. The masking layer 6 has, in other words, a low adhesive compatibility with the layers 3, 5 of adhesive.

In some embodiments, the masking layer 6 may itself be carried on a substrate layer (not shown), with the substrate layer itself not performing a masking function. It will be understood that the use of a substrate layer can facilitate the delivery of the masking layer 6 from a roll or other supply into position with respect to the other layers 1, 3-5.

Figure 2 shows a stage in the manufacture of an air-bag, using the layers shown in figure 1.

First and second rollers 7,8 are provided adjacent one another, with edges of the rollers 7,8 being placed close together to form a nip 9 therebetween. The rollers 7,8 are arranged to rotate in opposite directions, so that material may be drawn between the rollers 7,8 and pass through the nip 9.

The layers 1, 3-6 are passed between the rollers 7,8 in the order shown in figure 1, namely (from one side), the first layer 1 of fabric, the first layer 3 of adhesive, the masking layer 6, the second layer 5 of adhesive and the second layer 4 of fabric.

As the layers 1, 3-6 pass through the nip 9 between the rollers 7,8, the two layers 3,5 of adhesive are bonded firmly to one another, and (if they are not already) to the adjacent layers 1, 4 of fabric.

This bonding may occur through the application of pressure at the nip 9.

As discussed above, at least one of the layers 3, 5 of adhesive may be an activatable adhesive, and in these embodiments the adhesive is activated as the layers 1,3-6 pass through the rollers 7,8.

The adhesive may, for instance, be activated by pressure, in which case the rollers 7, 8 may be spaced apart by an appropriate distance to generate sufficient pressure to activate the adhesive.

In other embodiments the adhesive may be activated by temperature. In these embodiments, the rollers 7,8 may be heated rollers, or an arrangement such as a hot air blower may be provided to heat the layers 1, 3-6 as they pass between the rollers 7,8 (or alternatively shortly before or after this occurs).

In further embodiments, the adhesive may be activated through exposure to a further substance, such as water. In these embodiments, one or more sprays or other devices may be provided to dispense the additional substance that is required to activate the adhesive.

In the embodiments described above the adhesive layers 3, 5 are positioned between the layers 1, 4 of fabric. However, in alternative embodiments the adhesive layers may be provided outside of the main structural layers, particularly if these layers are of fabric, and may flow or otherwise pass through the main structural layers to form a bond, for instance under the application of heat and/or pressure.

A multi-layer, bonded fabric 10 emerges from the far side of the rollers 7,8. Figure 3 shows this bonded fabric, with the outline of the masking layer 6 shown in phantom. It will be understood that the first and second layers 1,4 of fabric are strongly bonded together, except in the region where the masking layer 6 was provided, where these layers 1,4 will not be bonded together, or will be bonded only weakly.

In the above example, all of the layers 1, 3-6 are bonded to each other substantially simultaneously as they pass between the rollers 7,8. However, in other embodiments the layers 1, 3-6 may be joined to each other in two or more sequential stages, with (for example) the two layers 3, 5 of adhesive being bonded together with the masking layer 6 interposed therebetween in a first step, and the two layers 1, 4 of fabric being bonded to the outer sides of the layers 3, 5 of adhesive in a second step.

In yet further embodiments, the layers 1, 3-6 may be guided together (e.g. by rollers) into a bonding zone, where a length of the layers 1, 3-6 is pressed together between opposing press plates. The press plates are preferably vertically oriented. Heat may be applied to the layers 1, 3-6 as they are pressed between the press plates. Once the layers 1, 3-6 have been bonded together, the press plates are separated once again and the bonded length of the layers 1, 3-6 is advanced so that a new, unbonded length of the layers can be moved between the press plates.

Preferably, the length of the layers 1, 3-6 that is bonded between the press plates corresponds to one air-bag. The press plates may include (or be associated with) a cutting arrangement, which may cut out the shape of the air-bag, or may simply cut off the bonded length of the layers 1, 3-6 in its entirety. The cutting may take place as the layers 1, 3-6 are bonded between the press plates, or as a second, separate step.

In the embodiment shown in the figures, the masking layer 6 is of an appropriate shape to form the air passageways and chambers of an inflatable curtain (IC)-type air-bag. In particular, an elongate gas passageway 11 is provided, with three main gas chambers 12a, 12b, 12c branching off from, and in fluid communication with, the gas passageway 11.

As a next stage in the manufacture, the bonded fabric 10 is cut around all or some of the regions defined by the masking layer 6, in a pre-defined shape 13 (shown in phantom in figure 3). Figure 4 shows a finished air-bag 14 produced as a result of this cutting operation. It can be seen that this air-bag 14 comprises the gas passageway 11 and a series of interconnected inflatable gas chambers 12a, 12b, 12c, surrounded by regions of bonded fabric which maintain the integrity of the chambers 12, 12b, 12c. This air-bag 14 is ready to be connected to a gas generator (not shown), and rolled/folded ready for installation in a vehicle.

Because the finished air-bag 14 will inevitably be rolled and/or folded to be installed in an air-bag module, it is preferred that all of the layers used in the production of the air-bag 14 are flexible. This includes the layers 3,5 of adhesive and the masking layer 6.

Indeed, it will be understood that the masking layer 6 may be contained within the finished air-bag 14, and so the masking layer 6 must not interfere with the operation of the air-bag 14.

According to the invention, steps are taken to retrieve or otherwise remove the masking layer 6 (e.g. by dissolving) from the air-bag 14 after the bonding step is complete. This will help to reduce the weight of the air-bag 14, as well as eliminating the possibility of the masking layer 6 causing problems, e.g. by blocking a passageway.

In the embodiment shown in the figures, two layers 3,5 of adhesive are used. It is, however, envisaged that only one layer of adhesive may be used, with this layer forming a bond directly between the two layers 1,4 of fabric.

It is also envisaged that adhesive may be applied directly to the inner surfaces of one or more of the layers 1,4 of fabric prior to the layers being passed between the rollers 7,8. This is an alternative to providing the adhesive in the form of separate layers or sheets. Adhesive may be applied to one or both of the layers 1, 4 of fabric by spraying, painting, dipping or any other suitable process.

In preferred embodiments the adhesive forms a substantially air-tight layer between at least one inflatable chamber and the exterior of the air-bag 14. This may be achieved, for example, by selecting an adhesive so that it will, during the bonding step, fill substantially all of the gaps between the fibres of an exterior fabric layer 1, 4.

It will be understood that the air-bag 14 can be formed through a simple process with a relatively small number of steps. It should also be noted that no sewing or interweaving steps are required to form the air-bag 14. This has a number of advantages, not least in the time and work required to complete the air-bag 14.

Methods embodying the present invention may also be relatively flexible. If it was decided to change the design of the air-bag 14 to include four gas chambers, rather than three, this could be effected simply by introducing a masking layer 6 having a different configuration, and modifying the outline 13 which is cut once the layers 1,4 have been bonded together. No changes or reprogramming would need to be made with respect to any sewing or interweaving looms or other machinery.

It is anticipated that embodiments of the invention are likely to be better suited to relatively flat designs of air-bag, such as IC-type air-bags. However, it is envisaged that the invention may also find use in the production of other types of air-bags, for instance front air-bags, pedestrian protection air-bags and pelvis restraint cushions.

In further embodiments of the invention the layers 1,4 of fabric may be bonded to one another by means other than adhesive. For instance, the layers 1,4 of fabric may be passed between rollers which are heated to a sufficient temperature to cause the layers 1,4 to bond directly to one another, for instance through a hot-melt process. In this case, the masking layer 6 may be provided to prevent the layers 1,4 from bonding to one another, and the masking layer 6 is therefore desirably formed from a material having a higher melting point than the layers of 1,4 of fabric.

While the embodiments described above involve the bonding of two layers 1,4 of fabric to one another, it is envisaged that the embodiments of the invention may be used with air-bags that are formed from three or more layers of fabric, and a skilled person will readily understand how the method may be adapted to accommodate this.

In embodiments of the invention, the bonding between the layers 1, 4 of fabric may be supplemented by additional strengthening, such as sewing or welding, particularly in regions where high stresses are expected to be encountered. However, preferably no such additional strengthening is used.

In some designs of air-bag, weak points are deliberately introduced into the design. One way in which this may be achieved using the present invention is shown schematically in figure 5.

In the embodiment discussed above, an IC-type air-bag is formed with three successive gas chambers 12a, 12b, 12c, connected by a relatively wide gas passageway 11, similar to that described above.

Figure 5 shows a close-up view of a modified masking layer 6. In this embodiment, a series of thin gaps 15 is formed in the portion of the masking layer 6 that defines the passageway 11 between the second and third gas chambers 12b, 12c. Where these gaps 15 are provided in the masking layer 6, the first and second layers 1,4 of fabric will be bonded to one another. It will therefore be understood that, in the finished air-bag, there is a very high resistance to the flow of gas from the second gas chamber 12b to the third gas chamber 12c. However, where the gas pressure within the second chamber 12b rises to a very high level (for instance, if the occupant impacts strongly against the air-bag 14), the thin regions of bonding that are formed in the passageway 11 between the second and third chambers 12b, 12c may be overcome, thus opening the passageway 11 fully and allowing gas to flow freely from the second chamber 12b to the third chamber 12c, thus inflating the third chamber 12c.

This may be useful if the third chamber 12c is an "overflow" chamber, provided in a location where it is not likely to be impacted by a vehicle occupant. The second chamber 12b can be inflated to a relatively high pressure, to provide protection for a vehicle occupant. However, where the vehicle occupant strikes the second 12b very strongly, it may be desirable to vent some of the gas from the second chamber 12b to allow the air-bag to "give" to a greater degree. In this case, the connection to the third chamber 12c will be opened, thus allowing some gas to be vented from the second chamber 12b.

A skilled person will appreciate how this technique may be applied to many different types of air-bag.

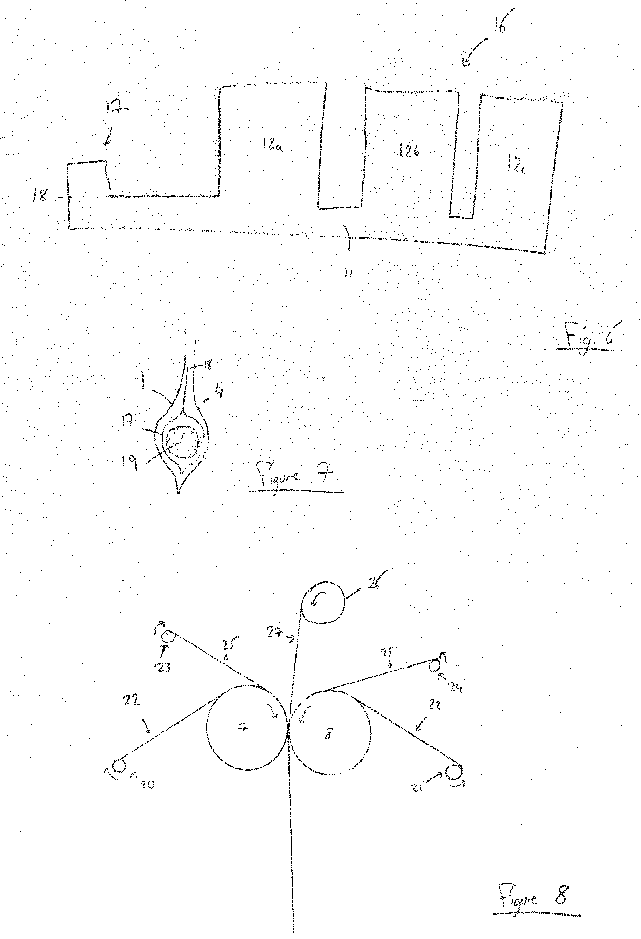

Figure 6 shows a modified design of masking layer 16. In this embodiment, the masking layer 16 once again has regions corresponding to a delivery passageway 11 and three inflatable chambers 12a, 12b, 12c. However, the masking layer 16 also has a widened region 17 at the free end of the passageway 11, where the inflator (not shown in figure 6) is to be connected to the finished air-bag. The widened region is preferably approximately twice as wide as the remainder of the section of passageway 11 that connects the free end of the passageway 11 to the first inflatable chamber 12a, and a fold line 18 is defined around half-way across the width of the widened region 17. The widened region 17 may be folded on itself at the fold line 18 to create a region which is approximately the same width as the remainder of the section of passageway that connects the free end of the passageway 11 to the first inflatable chamber 12a, but is of double thickness.

Figure 7 shows an end-on view of a finished air-bag formed with the masking layer 16 of figure 6. The delivery nozzle 19 of the inflator is placed between the two layers of the widened region 17, so that the two layers of the widened region 17 lie between the inflator nozzle 19 and the layers 1, 4 of fabric. This is to protect the fabric of these layers 1, 4 from damage arising from aggressive introduction of compressed gas through the inflator nozzle 19.

In the embodiments described above the main layers of the air-bag may be formed from a woven fabric. However, an alternative construction is shown schematically in figure 8. Two main counter-rotating rollers 7, 8 are again provided. First and second film rollers 20, 21 are provided, each carrying a supply of a thermoplastic film 22, for instance a PET film, such as Mylar ®. Additionally, first and second fibre rollers 23, 24 are provided, each carrying a supply of fibre reinforcement 25. The fibre reinforcement 25 may be in the form of a tape formed from, or carrying, a plurality of fibres. The fibres may optionally be at least partially woven, but alternatively may be aligned, randomly oriented or arranged in any other suitable way without being interwoven with each other.

## Claims

1. A method for forming a vehicle air-bag (14), comprising the steps of:
providing first and second layers (1, 4);
interposing a masking layer (6) between the first and second layers (1, 4);
applying a process to the first and second layers (1, 4) to bond the first and second layers together, wherein the bonding is through an adhesive positioned (3, 5) between the layers or through a hot-melt process, and wherein the presence of the masking layer (6) between the first and second layers (1, 4) substantially prevents the first and second layers (1, 4) from being bonded to one another where the masking layer (6) is positioned between the first and second layers (1, 4);
forming an air-bag from the first and second layers (1, 4), wherein the regions corresponding to the masking layer (6) comprise one or more inflatable chambers substantially surrounded by regions of the first and second layers (1, 4) which are bonded to one another to form joins around the one or more chambers;
cutting around the masking layer (6) to form the finished air-bag (14); and
removing the masking layer (6) from the air-bag (14), wherein the step of removing the masking layer (6) and the cutting step are carried out after the bonding step.

2. A method according to claim 1, wherein when the bonding process uses an adhesive, the masking layer (6) is of low adhesive compatibility with the adhesive (3, 5).

3. A method according to claim 1 or 2, wherein when the bonding process uses an adhesive, two layers of adhesive (3, 5) are provided, one on an inner region of each of the layers (1, 4).

4. A method according to claim 1 or 2, wherein when the bonding process uses an adhesive, one layer of adhesive (3, 5) is provided between the layers (1, 4).

5. A method according to any one of claims 1 to 4, wherein when the bonding process uses an adhesive, the adhesive (3, 5) is provided as a separate sheet which is introduced between the first and second layers (1, 4) prior to the bonding process.

6. A method according to any one of claims 1 to 4, wherein when the bonding process uses an adhesive, the adhesive (3, 5) is applied to one or both of the layers (1, 4) prior to the bonding process.

7. A method according to claim 1, wherein when the bonding process is a hot-melt process the masking layer (6) has a higher melting point than at least one of the first and second layers of fabric (1, 4).

8. A vehicle air-bag (14) formed by the method of any of claims 1 to 6, the vehicle air-bag (14) comprising first and second superimposed layers (1, 4), the air-bag (14) comprising at least one inflatable chamber defined between the first and second layers (1, 4), the at least one inflatable chamber being substantially surrounded by regions of the first and second layers which are bonded together, and further comprising a removable masking layer (6) which is provided between the first and second layers (1, 4) and has a region which is substantially the same shape as the at least one inflatable chamber, and is not positioned between the first and second layers (1, 4) in the regions thereof which are bonded together, wherein the regions of the first and second layers (1, 4) which are bonded together are bonded together by means of an adhesive (3, 5) or by means of a hot-melt process.

9. A vehicle air-bag (14) according to claim 8, wherein the regions of the first and second layers (1, 4) which are bonded together are superimposed to lie substantially flat on one another, and are not folded to form seams.

## Patentansprüche

1. Verfahren zum Bilden eines Fahrzeug-Airbags (14), umfassend die folgenden Schritte:
Bereitstellen einer ersten und zweiten Schicht (1, 4);
Einfügen einer Maskierungsschicht (6) zwischen der ersten und der zweiten Schicht (1, 4);
Anwenden eines Prozesses an der ersten und der zweiten Schicht (1, 4), um die erste und die zweite Schicht miteinander zu verbinden, wobei die Verbindung durch einen zwischen den Schichten positionierten Klebstoff (3, 5) oder durch einen Heißschmelzprozess erfolgt, und wobei das Vorhandensein der Maskierungsschicht (6) zwischen der ersten und der zweiten Schicht (1, 4) im Wesentlichen verhindert, dass die erste und die zweite Schicht (1, 4) dort miteinander verbunden werden, wo die Maskierungsschicht (6) zwischen der ersten und der zweiten Schicht (1, 4) positioniert ist;
Bilden eines Airbags aus der ersten und der zweiten Schicht (1, 4), wobei die der Maskierungsschicht (6) entsprechenden Bereiche eine oder mehrere aufblasbare Kammern umfassen, die im Wesentlichen von Bereichen der ersten und der zweiten Schicht (1, 4) umgeben sind, die miteinander verbunden sind, um Verbindungen um die eine oder die mehreren Kammern herum zu bilden;
Schneiden um die Maskierungsschicht (6) herum, um den fertigen Airbag (14) zu bilden; und
Entfernen der Maskierungsschicht (6) vom Airbag (14), wobei der Schritt des Entfernens der Maskierungsschicht (6) und der Schneideschritt nach dem Verbindungsschritt durchgeführt werden.

2. Verfahren nach Anspruch 1, wobei, die Maskierungsschicht (6) eine geringe Kompatibilität mit dem Klebstoff (3, 5) aufweist, wenn bei dem Verbindungsprozess ein Klebstoff verwendet wird.

3. Verfahren nach Anspruch 1 oder 2, wobei zwei Schichten Klebstoff (3, 5), eine auf einem Innenbereich jeder der Schichten (1, 4), vorgesehen sind, wenn bei dem Verbindungsprozess ein Klebstoff verwendet wird.

4. Verfahren nach Anspruch 1 oder 2, wobei eine Schicht Klebstoff (3, 5) zwischen den Schichten (1, 4) vorgesehen ist, wenn bei dem Verbindungsprozess ein Klebstoff verwendet wird.

5. Verfahren nach einem der Ansprüche 1 bis 4, wobei, wenn bei dem Verbindungsprozess ein Klebstoff verwendet wird, der Klebstoff (3, 5) als ein separates Blatt vorgesehen ist, das vor dem Verbindungsprozess zwischen die erste und die zweite Schicht (1, 4) eingebracht wird.

6. Verfahren nach einem der Ansprüche 1 bis 4, wobei, wenn bei dem Verbindungsprozess ein Klebstoff verwendet wird, der Klebstoff (3, 5) vor dem Verbindungsprozess auf eine der Schichten oder auf beide Schichten (1, 4) aufgebracht wird.

7. Verfahren nach Anspruch 1, wobei, wenn der Verbindungsprozess ein Heißschmelzprozess ist, die Maskierungsschicht (6) einen höheren Schmelzpunkt als die erste und/oder die zweite Schicht Gewebe (1, 4) aufweist.

8. Fahrzeug-Airbag (14), der durch das Verfahren nach einem der Ansprüche 1 bis 6 gebildet ist, wobei der Fahrzeug-Airbag (14) eine erste und zweite übereinanderliegende Schicht (1, 4) umfasst, wobei der Airbag (14) mindestens eine aufblasbare Kammer umfasst, die zwischen der ersten und der zweiten Schicht (1, 4) definiert ist, wobei die mindestens eine aufblasbare Kammer im Wesentlichen von Bereichen der ersten und der zweiten Schicht umgeben ist, die miteinander verbunden sind, und ferner eine entfernbare Maskierungsschicht (6) umfasst, die zwischen der ersten und der zweiten Schicht (1, 4) vorgesehen ist und einen Bereich aufweist, der im Wesentlichen die gleiche Form wie die mindestens eine aufblasbare Kammer aufweist und nicht zwischen der ersten und der zweiten Schicht (1, 4) in den miteinander verbundenen Bereichen derselben angeordnet ist, wobei die Bereiche der ersten und der zweiten Schicht (1, 4), die miteinander verbunden sind, mittels eines Klebstoffs (3, 5) oder mittels eines Heißschmelzprozesses miteinander verbunden sind.

9. Fahrzeug-Airbag (14) nach Anspruch 8, wobei die Bereiche der ersten und der zweiten Schicht (1, 4), die miteinander verbunden sind, übereinanderliegen, um im Wesentlichen flach aufeinander zu liegen und nicht gefaltet sind, um Nähte zu bilden.

## Revendications

1. Procédé de formation d'un coussin gonflable de sécurité (14) pour véhicule, comprenant les étapes suivantes :
fourniture d'une première et d'une seconde couche (1, 4) ;
interposition d'une couche de masquage (6) entre la première et la seconde couche (1, 4) ;
application d'un procédé à la première et à la seconde couche (1, 4) pour coller l'une à l'autre la première et la seconde couche, le collage s'effectuant grâce à un adhésif (3, 5) positionné entre les couches, ou par un procédé par fusion, et la présence de la couche de masquage (6) entre la première et la seconde couche (1, 4) empêchant sensiblement que la première et la seconde couche (1, 4) ne se collent l'une à l'autre en les points où la couche de masquage (6) est positionnée entre la première et la seconde couche (1, 4) ;
formation d'un coussin gonflable de sécurité à partir de la première et de la seconde couche (1, 4), les régions correspondant à la couche de masquage (6) comprenant une ou plusieurs chambres gonflables entourées sensiblement par des régions de la première et de la seconde couche (1, 4) qui sont collées l'une à l'autre pour former des joints autour de la ou des chambres ;
découpage des contours de la couche de masquage (6) pour former le coussin gonflable de sécurité fini (14) ; et
enlèvement de la couche de masquage (6) du coussin gonflable de sécurité (14), l'étape d'enlèvement de la couche de masquage (6) et l'étape de découpage étant mises en oeuvre après l'étape de collage.

2. Procédé selon la revendication 1, dans lequel, quand le procédé par collage utilise un adhésif, la couche de masquage (6) présente une faible compatibilité adhésive avec l'adhésif (3, 5).

3. Procédé selon la revendication 1 ou 2, dans lequel, quand le procédé par collage utilise un adhésif, deux couches d'adhésif (3, 5) sont prévues, respectivement sur une région interne de chacune des couches (1, 4).

4. Procédé selon la revendication 1 ou 2, dans lequel, quand le procédé par collage utilise un adhésif, une couche d'adhésif (3, 5) est prévue entre les couches (1,4).

5. Procédé selon l'une quelconque des revendications 1 à 4, dans lequel, quand le procédé par collage utilise un adhésif, l'adhésif (3, 5) est prévu sous forme d'une feuille distincte qui est introduite entre la première et la seconde couche (1, 4) avant le procédé par collage.

6. Procédé selon l'une quelconque des revendications 1 à 4, dans lequel, quand le procédé par collage utilise un adhésif, un adhésif (3, 5) est appliqué sur l'une des couches (1, 4) ou sur les deux, avant le procédé par collage.

7. Procédé selon la revendication 1, dans lequel, quand le procédé par collage utilise un procédé par fusion, la couche de masquage (6) présente un point de fusion plus élevé que celui de la première et/ou de la seconde couche de tissu (1, 4).

8. Coussin gonflable de sécurité (14) pour véhicule, formé par le procédé selon 'une quelconque des revendications 1 à 6, le coussin gonflable de sécurité (14) pour véhicule comprenant une première et une seconde couche superposées (1, 4), le coussin gonflable de sécurité (14) comprenant au moins une chambre gonflable définie entre la première et la seconde couche (1, 4), l'au moins une chambre gonflable étant sensiblement entourée par des régions de la première et de la seconde couche qui sont collées l'une à l'autre, et comprenant en outre une couche de masquage (6) amovible qui est prévue entre la première et la seconde couche (1, 4) et possède une région qui a sensiblement la même forme que l'au moins une chambre gonflable, et n'est pas positionnée entre la première et la seconde couche (1, 4) dans les régions de ces dernières qui sont collées l'une à l'autre, les régions de la première et de la seconde couche (1, 4) qui sont collées l'une à l'autre étant collées l'une à l'autre au moyen d'un adhésif (3, 5) ou au moyen d'un procédé par fusion.

9. Coussin gonflable de sécurité (14) pour véhicule selon la revendication 8, dans lequel les régions de la première et de la seconde couche (1, 4) qui sont collées l'une à l'autre sont superposées pour se retrouver sensiblement à plat l'une sur l'autre, et ne sont pas pliées pour former des jointures.
